# EUROPÄISCHE PATENTSCHRIFT

(11) **EP 0 581 397 B1**
(45) Veröffentlichungstag und Bekanntmachung des Hinweises auf die Patenterteilung: **22.01.1997**
(21) Anmeldenummer: 93250168.7
(22) Anmeldetag: 16.06.1993
(51) Int. Cl.: B65G 47/46, B65G 47/84

(54) **Fördersystem und Stiftführung für eine Bahnkreuzung in einem Fördersystem**
Conveyor system and pin guide for a track crossing in a conveyor system
Système de transport et guidage de cheville pour un croisement de voies dans un système de transport

(30) Priorität: 31.07.1992 US 923043
(43) Veröffentlichungstag der Anmeldung: 02.02.1994
(73) Patentinhaber: MANNESMANN Aktiengesellschaft, 40027 Düsseldorf (DE)
(72) Erfinder: Veit, Frank William, Ada, Michigan 49301 (US); Cotter, David Harley, Coopersville, Michigan 49404 (US); Ehlert, Ronald C., Wyoming, Michigan 49509 (US)
(74) Vertreter: Meissner, Walter, Dipl.-Ing.

(56) Entgegenhaltungen:
- EP-A- 0 444 734
- EP-A- 0 484 149
- US-A- 4 717 011
- US-A- 4 971 190
- US-A- 5 027 939

## Beschreibung

Die Erfindung bezieht sich im allgemeinen auf die Führung eines Ablenk-Gleitschuhs oder eine Bahnkreuzung von Führungsstiften eines Ablenk-Gleitschuhs in einem Förderer, der in Artikel-Sortiersystemen verwendet wird.

Artikel-Sortiersysteme sind aus dem Stand der Technik bereits bekannt. Diese Systeme enthalten einen Förderer für Artikel, welcher in der Lage ist, eine große Menge an Artikeln wie bspw. Boxen in verschiedenen Größen und mit verschiedenem Gewicht zu handhaben. Wo nur ein Sortieren zu einer einzigen Seite erforderlich ist, verwendet der Förderer Gleitschuhe, die egal an welcher Seite der lattenartigen Oberflächenabschnitte des Förderers befestigt sind. Eine Regeleinrichtung bestimmt, gemäß der Artikelgröße, die korrekte Anzahl von Gleitschuhen, welche erforderlich ist, um den Artikel von dem Förderer herunter und auf eine Sortierbahn, die an einer Seite des Förderers angeordnet ist, zu schieben. Wenn ein zu entladener Artikel den Sortierpunkt erreicht, stellt die Regeleinrichtung ein Ablenkstellwerk an, um eine geeignete Anzahl von Gleitschuhen zu einer diagonalen Führungsbahn abzulenken. Durch die laterale Verschiebung der geeigneten Gleitschuhe wird die Artikelseite einer lateralen Kraft ausgesetzt, um den Artikel auf die Sortierbahn zu schieben.

Dabei taucht jedoch ein Problem auf, wenn sich alternative Bahnen benachbart zueinander auf entgegengesetzten lateralen Seiten des Förderers befinden. Dies erfordert ein Kreuzen der entgegengesetzt ausgerichteten Führungsbahnen, die den benachbarten Sortierbahnen zugeordnet sind. Damit wird an dem Kreuzungspunkt der Führungsbahnen ein Stellwerksystem erforderlich, um die Gleitschuhe durch die Kreuzung zu führen, so daß eine kontinuierliche Kraft auf die Artikel ausgeübt wird, welche die Artikel entlang des gewünschten Wegs schiebt.

Der Stand der Technik offenbart Fördersysteme, wie bspw. in der US-PS-3.361.247 von Lauzon et al, welche eine Überkreuz-Stiftführung oder ein Stellwerk verwenden, das ein laterales Abschieben entweder von der linken oder der rechten Seite des Förderers gestattet. Das Überkreuz-Stellwerk verwendet eine Grundplatte, die mit einem reaktivierenden Element verbunden ist, das derart agiert, daß es von einer ankommenden Führungsrolle abgelenkt wird. Die Grundplatte wird gedreht, um der Führungsrolle das Hindurchlaufen durch die Kreuzung zu gestatten. Das Stellwerk verhindert durch ein Verschließen der anderen Führungsbahn für die Führungsrolle, daß diese versehentlich in die falsche Bahn geführt wird. Nach der Drehung in die alternative Richtung oder Bahn erlaubt das Stellwerk dem Stift, hindurchzulaufen. Dieses Patent von Lauzon et al stellt eine Verbesserung gegenüber dem Stand der Technik dar, weil die zur Verschiebung der Stellwerksposition erforderliche Energie durch die Bewegung des ankommenden Gleitschuhstifts oder der Palette aufgebracht wird, ohne daß Magnete oder andere angetriebene Operationseinrichtungen verwendet werden müssen.

Die Erfindung sieht eine nicht angetriebene, selbst die Position regelnde, Bahnkreuzungs-Stiftführung oder ein Stellwerk vor. Gemaß einem ersten Aspekt der Erfindung ist ein mechanisches Stellwerk vorgesehen, das ein einteiliges Bauteil aufweist, welches sich in der Ebene der sich kreuzenden Führungsbahnen, die die Artikel-Ablenkgleitschuhe in einer vorbestimmten Weise relativ zum Abstützrahmen des Förderers bewegen, dreht: Das einteilige Bauteil hat ein Plattenbauteil in der Drehebene und erste und zweite Nockenscheibenbauteile erstrecken sich von dem Plattenbauteil und bilden erste und zweite Steueroberflächen. Das einteilige Bauteil enthält weiterhin Mittel, die erste und zweite Blockieroberflächen bilden, welche sich von dem Plattenbauteil erstrecken. Die Steueroberflächen sind in den Führungsbahnen positioniert, um das Plattenbauteil zwischen ersten und zweiten Positionen zu rotieren, um wahlweise die Blockieroberflachen derart zu positionieren, daß diese die Öffnung zu der nicht benutzten Führungsbahn bedecken. Durch Kombination der Steueroberflächen und Blockieroberflächen mit einem Plattenbauteil in einem sich drehenden einteiligen Bauteil wird eine Stiftführung geschaffen, die weich und ruhig im Betrieb sowie haltbarer und weniger anfällig ist als Einrichtungen aus dem Stand der Technik.

Nach einem anderen Aspekt der Erfindung ist das einteilige Bauteil angepaßt, um sich zwischen den ersten und zweiten Positionen um einen Drehwinkel zu drehen, der kleiner als die Hälfte des Ablenkwinkels von dem Förderer ist. In einer bevorzugten Ausführungsform beträgt der Bewegungswinkel des einteiligen Bauteils 4,5 Grad. Weil die Ausdehnung der Bewegung gering ist, kann sie bei einer geringeren Geschwindigkeit durchgeführt werden, was eine weiche und ruhige Bewegung und einen reduzierten Verschleiß der Komponenten sicherstellt.

Gemäß einem weiteren Aspekt der Erfindung ist das Plattenbauteil durch Drehmittel drehbar befestigt, um sich zwischen ersten und zweiten Positionen zu drehen, damit wahlweise die ersten und zweiten Blockieroberflächen zur Führung eines Führungsbauteils von einem Ablenkelement entlang einer jeweiligen Führungsbahn positioniert werden können. Das erfindungsgemäße Drehmittel ist in bezug auf die Bewegung der Führungsbauteile gesehen vor den ersten und zweiten Steueroberflächen angeordnet. Eine solche Konfiguration erleichtert das Verschieben zwischen den ersten und zweiten Positionen durch einen extrem kleinen Bewegungsbogen.

Gemäß einem weiteren Aspekt der Erfindung enthält eine Stiftführung für eine Bahnkreuzung ein generell in der Ebene der Führungsbahnen drehbar befestigtes Plattenbauteil, welches die Führungsbauteile des Ablenkelements führt und erste und zweite Nockenscheibenbauteile aufweist, welche sich von dem Plattenbauteil erstrecken und erste und zweite Steueroberflächen bilden. Es sind Mittel vorgesehen, die erste und zweite Blockieroberflächen bilden, die angepaßt sind, um die Führungsbauteile durch eine Führungsbahnkreuzung zu führen. Erfindungsgemäß sind die ersten und zweiten Steueroberflächen derart positioniert, daß sie durch die Führungsrolle des Führungsbauteils angestellt werden können, um das Plattenbauteil zu rotieren und um eine der Blockieroberflächen wegen einer Öffnung in einer Führungsbahn zu positionieren. Die ersten und zweiten Blockieroberflächen werden zum Blockieren des Führungsstifts von dem Führungsbauteils positioniert. Diese Kombination des Plattenbauteils, welches in Reaktion zu den Führungsrollen rotiert wird, während die Ablenkelemente in Reaktion zu den Führungsstiften der, Blockieroberflächen geführt werden, ist gefunden worden, um einen außergewöhnlich weichen und ruhigen Betrieb zu schaffen, während der Bogen, um welchen sich das Plattenbauteil zum Umschalten des Weges, über den die Führungsbauteile geführt werden, bewegen muß, minimiert werden kann.

Gemäß noch einem weiteren Aspekt der Erfindung enthält eine Stiftführung für eine Bahnkreuzung ein generell in der Ebene der Führungsbahnen von dem Förderer befindliches Plattenbauteil und erste und zweite Nockenscheibenbauteile, welche sich von dem Plattenbauteil erstrecken und erste und zweite Steueroberflächen bilden, welche zur Anstellung durch die Führungsrolle des Führungsbauteils positioniert sind, um das Plattenbauteil zwischen ersten und zweiten Stellwerkpositionen zu drehen. Die ersten und zweiten Nockenscheibenbauteile bilden weiterhin jeweils dritte und vierte Steueroberflächen für die Anstellung durch einen Führungsstift eines Führungsbauteils, um das Plattenbauteil zwischen ersten und zweiten Positionen zu rotieren. Weil das Plattenbauteil entweder durch die Führungsrolle oder den Stift des Führungsbauteils rotiert werden kann, wird ein Reserveanstellmittel geschaffen. Sollte die Führungsrolle im Führungsbauteil eines besonderen Ablenkelements fehlen oder nicht funktionieren, wird der wesentlich härtere permanente Führungsstift immer noch in der Lage sein, das Plattenbauteil zwischen den ersten und zweiten Positionen zu rotieren, indem er mit den jeweiligen dritten und vierten Steueroberflächen in Kontakt kommt.

Diese und andere Ziele, Vorteile und Merkmale der Erfindung werden nun in der anschließenden Beschreibung unter Bezugnahme auf die begleitenden Zeichnungen verdeutlicht.

Es zeigt:
Fig.1 eine Draufsicht auf einen erfindungsgemäßen Artikelförderer;
Fig.2 eins Seitenansicht von Ablenkelementen, die an der Förderoberfläche des Förderers in Fig.1 befestigt sind;
Fig.3 eine Draufsicht auf die Förderoberfläche in Fig.1 mit Ablenkgleitschuhen, welche eine Ablenkbewegung darstellt;
Fig.4 eine perspektivische Draufsicht auf eine erste Ausführungsform einer Stiftführung für eine Bahnkreuzung gemäß der Erfindung;
Fig.5 eine Draufsicht auf die Stiftführung gemäß Fig.4;
Fig.6 eine Schnittansicht entlang der Linie VI-VI in Fig.5;
Fig.7 eine Schnittansicht entlang der Linie VII-VII in Fig.5;
Fig.8 eine Schnittansicht entlang der Linie VIII-VIII in Fig.5;
Fig.9 eine Darstellung in auseinandergezogener Anordnung ähnlich derjenigen in Fig.8;
Fig.10 eine Eraufsicht vom Boden der Grundplatte einer Stiftführung in Fig.4;
Fig.11 eine perspektivische Teilansicht der Stiftführung gemäß Fig.4:
Fig.12 die gleiche Ansicht wie in Fig.11, bei der jedoch zusätzliche Teilbereiche abgebaut worden sind, um die zusätzliche Struktur des beweglichen, einteiligen Bauteils zu offenbaren;
Fig.13a eine Draufsicht auf die Stiftführung in Fig.4, die die Bewegung der Führungsbauteile entlang eines ersten Bewegungsweges zeigt;
Fig.13b die Position des beweglichen einteiligen Bauteils in Fig.13a;
Fig.14a die gleiche Ansicht wie in Fig.13a, die die Bewegung der Führungsbauteile entlang des zweiten Bewegungsweges zeigt;
Fig.14b die Position des beweglichen einteiligen Bauteils in Fig.14a; und
Fig.15 eine Draufsicht auf eine Stiftführung für eine Bahnkreuzung gemäß dem Stand der Technik.

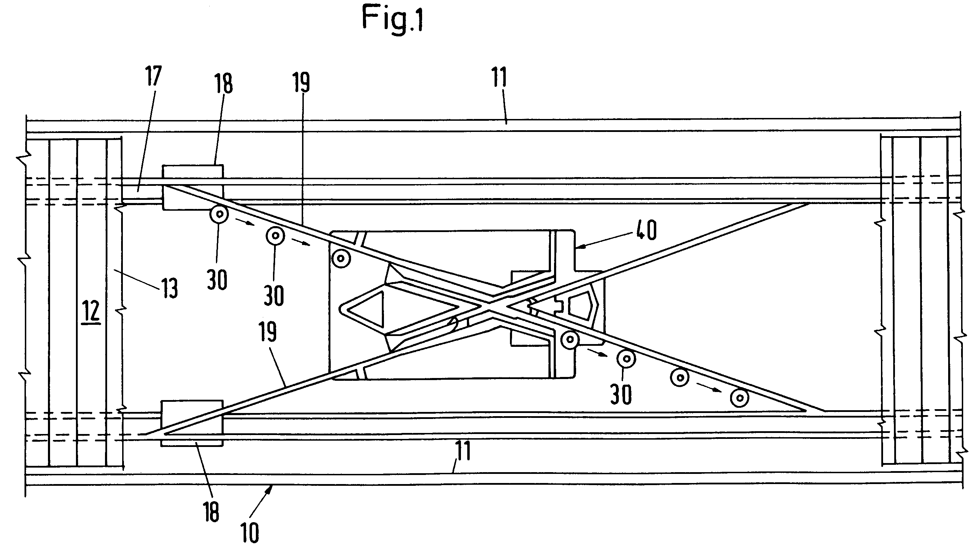

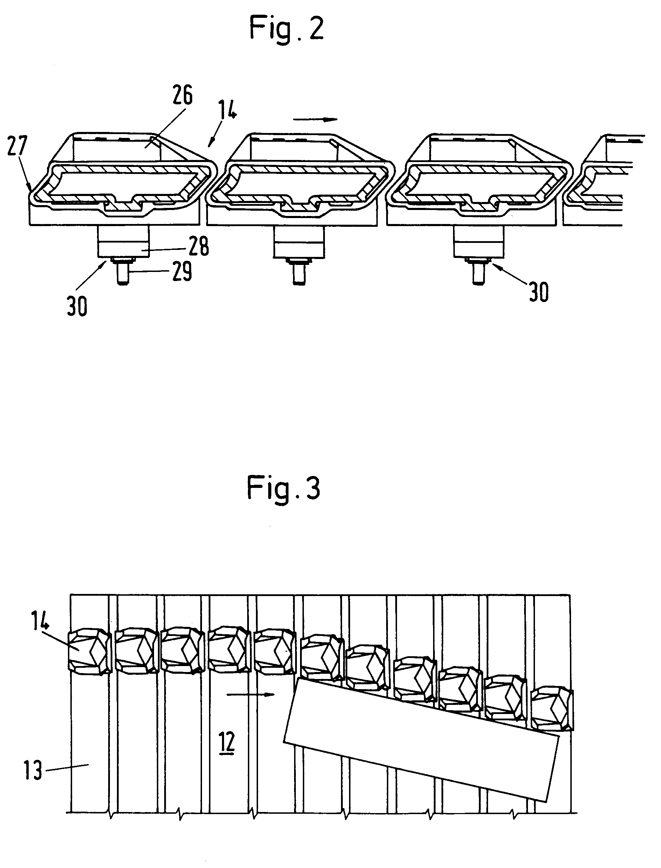

Unter Bezugnahme auf die Zeichnungen und die darin dargestellten Ausführungsbeispiele hat ein im allgemeinen mit 10 bezeichneter Förderer Seitenbauteile 11, die eine angetriebene Artikel-Förderoberfläche 12 tragen, welche durch eine Vielzahl von Artikel tragenden und transportierenden Latten, die sich auf dem Förderer transversal erstrecken (Fig.1), gebildet wird. Die Enden der Latten sind an endlosen Antriebsmitteln, wie bspw. Ketten (nicht dargestellt), befestigt und werden durch diese bewegt, wobei diese Mittel in Aussparungen der Seitenbauteile 11 angeordnet sind. Ein Ablenkmittel, wie bspw. eine Gleitschuhanordnung 14, ist gleitend auf jeder Latte 13 (Fig.2 und 3) befestigt. Jede Gleitschuhanordnung enthält ein oberes Ablenkbauteil 26, welches zum Kontaktieren eines Pakets verwendet wird, das oben auf der Förderoberfläche 12 befördert wird. Ein unteres Ablenkbauteil 27 ist an dem oberen Ablenkbauteil 26 befestigt und enthält ein Führungsbauteil 30, welches aus einem Stift 29 und einer Führungsrolle 28 besteht und verwendet wird, um die Gleitschuhanordnung lateral entlang der verbundenen Latte 13 zu bewegen. Details der Gleitschuhe und Latten sind genauer in der US-PS-5.127.510, welche auf David Cotter, Bernhard Woltjer und Curtis E. LeMay ausgestellt ist und den Titel "Modulierte Gleitschuh- und Lattenkonstruktion" trägt, offenbart. Die Bewegung der Ablenkelemente schafft eine laterale Kraft, um ein oben auf den Förderlatten befindliches Paket zu verlagern. In Fig.3 ist ein Paket dargestellt, das nach unten rechts in Richtung einer Sortierbahn auf der rechten Seite (nicht dargestellt) abgelenkt wird. Jedoch ist der Förderer 10 in der Lage, Paletten zu Sortierbahnen auf der rechten oder linken Seite des Förderers abzulenken.

Das Führungsbauteil 30 läuft innerhalb einer Führungsbahn 17 entlang einer Seite des Förderers 10, bis ein Ablenkstellwerk 18 in bezug auf Signale von einem Regelsystem (nicht dargestellt) angestellt wird. Wenn das Ablenkstellwerk 18 aktiviert wird, wird das Führungsbauteil 30 auf der diagonalen Bahn 19 abgelenkt, welche die Bewegung des Gleitschuhs 14 über seine Führungsrolle 28, welches mit der Bahn in Eingriff Steht, führt. Die Diagonalbahn 19 kreuzt diagonal bis zu einer Position, die durch eine Stift-Führungsanordnung 40, oder ein Überkreuz-Stellwerk belegt ist. Das Ablenkstellwerk 18 ist genauer in der US-PS-5.038.912, die auf David Cotter ausgestellt ist und den Titel "Vertikal angestelltes Ablenkstellwerk" trägt, offenbart.

In der EP 0 484 149 A1 ist ein Überkreuz-Stellwerk offenbart, welches ein einteiliges Bauteil aufweist, das ein drehbar angeordnetes Plattenbauteil enthält, um sich in der Ebene der Führungsbahnen zwischen ersten und zweiten Positionen zu drehen. Das einteilige Bauteil enthält ein Paar Nockenscheibenbauteile, die jeweils eine Steueroberfläche bilden. Diese sind derart positioniert, daß sie durch ein Führungsbauteil, welches über eine vorgegebene Führungsbahn kreuzt, betätigt werden, wenn das einteilige Bauteil mit der gegenüberliegenden Führungsbahn ausgerichtet ist, um das einteilige Bauteil derart zu rotieren, daß es mit der kreuzenden Führungsbahn (fluchtend) ausgerichtet ist. Das einteilige Bauteil enthält weiterhin Mittel, die ein Paar blockierender Oberflächen 84a, 84b bilden, welche wahlweise Öffnungen in jeder der rührungsbahnen in deren Kreuzungspunkten schließen, um zu verhindern, daß ein Führungsbauteil in der falschen Führungsbahn kreuzt. Die Details des Überkreuz-Stellwerks im Cotter et al Patent werden hier nicht wiederholt.

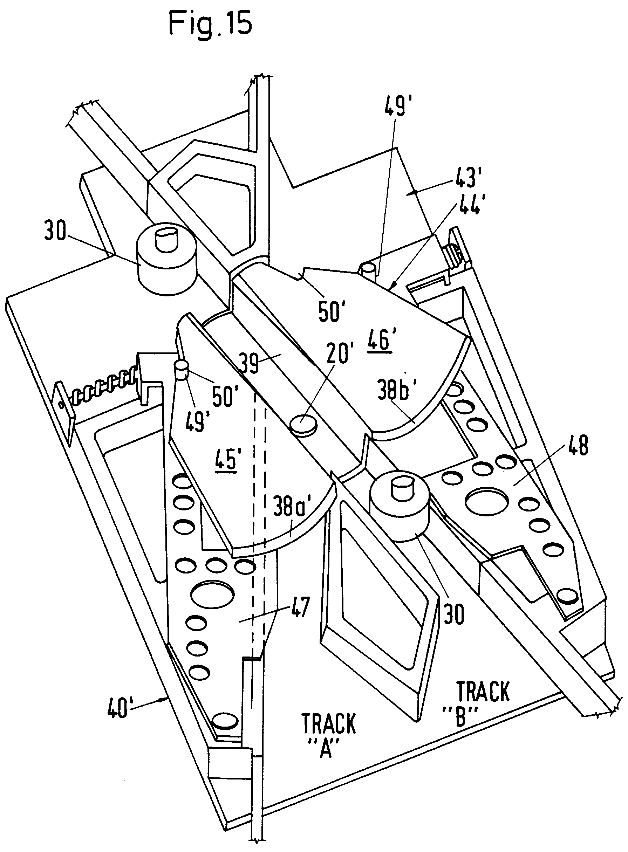

Es soll lediglich soviel gesagt werden, daß das Cotter et al Patent eine Stift-Führung, oder Überkreuz-Stellwerk 40' offenbart, welches ein einteiliges Bauteil 44' aufweist, das sich um eine Stutzenwalzen-Lagerungsanordnung 20' dreht, um wahlweise blockierende Oberflächen, die einen Kanal 39 bilden, mit einer von zwei Bahnen "A" oder "B" fluchtend auszurichten (Fig.15). Das einteilige Bauteil 44' enthält eine erste Nockescheiben 45', die eine Steueroberfläche 38a' bildet, welche in die Bahn A eingefügt ist, wenn der Kanal 39' mit der Bahn B fluchtend ausgerichtet ist. Das einteilige Bauteil 44' enthält zusätzlich ein zweites Nockenscheibenbauteil 46', das eine Steueroberfläche 38b' bildet, welche in die Bahn B eingefügt ist, wenn der Kanal 39' mit der Bahn A fluchtend ausgerichtet ist. Wenn in dieser Weise der Kanal 39' mit der Bahn B fluchtend ausgerichtet ist, wird ein die Bahn A kreuzendes Führungsbauteil 30 mit der Steueroberfläche 38a' in Kontakt kommen, wodurch das einteilige Bauteil 44', um die Welle 20' rotiert und dabei den Kanal 39' fluchtend mit der Bahn A ausrichtet. Auf ähnliche Weise wird, wenn der Kanal 39' fluchtend mit der Bahn A ausgerichtet ist, ein den Kanal B kreuzendes Führungsbauteil 30 mit der Steueroberfläche 38b' in Kontakt treten, wodurch das einteilige Bauteil 44' rotiert wird und den Kanal 39' fluchtend mit der Bahn B ausrichtet. Die Stellwerk-Anordnung enthält weiterhin ein Paar von vertikal orientierten Verschließstiften 49', von denen jeder wahlweise in korrespondierende Aussparungen in den assoziierten Nockenscheiben 45', 46' eingreift. Ein Paar Anstellmittel 47, 48 bewegt wahlweise den korrespondierenden Verschließstift 49' aus der assoziietren Aussparung 50' heraus, um es dem einteiligen Bauteil 44' zu gestatten, in die entgegengesetzte Position zu rotieren.

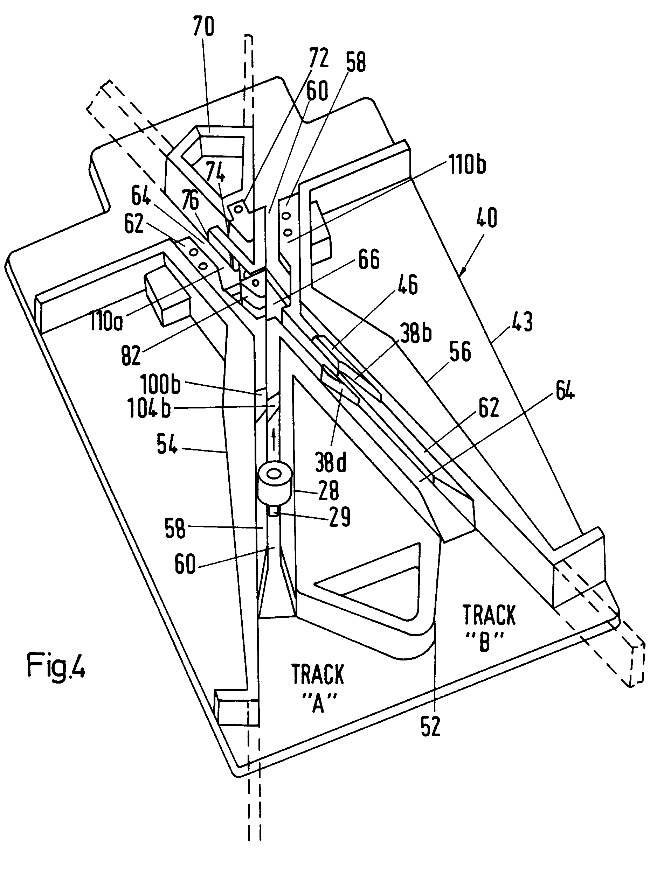

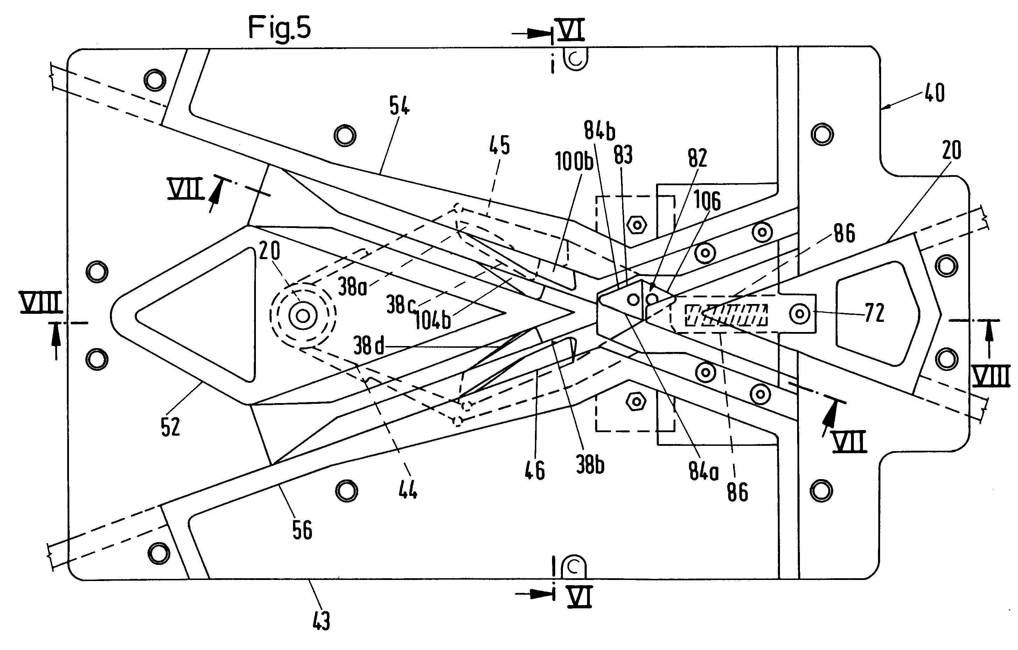

In einer anderen Ausführungsform enthält eine Stellwerkanordnung 40 ein Grundhauteil 43 und ein einteiliges Bauteil 44, welches über eine Stutzenwellen-Lagerungsanordnung 20 drehbar auf dem Grundbauteil 43 befestigt ist (Fig.4-14b). Die Grundplatte 43 enthält einen erhöhten Zentralbereich 52 und ein Paar Seitenwände 54, 56, welche zwischen der Seitenwand 54 und dem Zentralbereich 52 eine Bahn "A" und zwischen dem Zentralbereich 52 und der Seitenwand 56 eine Bahn "B" bilden. Die Bahn A enthält einen langgestreckten flachen Kanal 58, in welchem eine Führungsrolle 28 kreuzt (entlangläuft), und einen koaxialen langgestreckten tiefen Kanal 60, in welchem der Stift 29 entlangläuft. Gleichermaßen enthält die Bahn B einen langgestreckten flachen Kanal 62, in welchem Führungsrollen 28 entlanglaufen, und einen koaxialen langgestreckten tiefen Kanal 64, in welchem die Stifte 29 entlanglaufen. Die Bahnen "A" und "B" kreuzen in einem Kreuzungshohlraum 66. Die flachen Hohlräume 58, 62 und die tiefen Kanäle 60, 64 erstrecken sich hinter dem Kreuzungshohlraum 66 nach unten (hinten) hin weiter, jedoch mit entgegengesetzter lateraler Orientierung. Die Bahnen "A" und "B" kreuzen in einem Winkel, der dem doppelten Ablenkwinkel des Förderers 10 entspricht.

Eine an der Grundplatte 43 befestigte feststehende Nase 70 bildet mit der Seitenwand 56 unterhalb (hinter) des Kreuzungshohlraums 66 die Teilbereiche des flachen Kanals 58 und des tiefen Kanals 60. Die feststehende Nase 70 bildet ebenfalls mit der Seitenwand 54 unterhalb (hinter) des Kreuzungshohlraums 66 den Teilbereich des flachen Kanals 62 und des tiefen Kanals 64. Die feststehende Nase 70 enthält einen vorderen Teilbereich 72, welcher einen oberen Bereich 74 und einen breiteren unteren Bereich 76 aufweist. Der obere Bereich 74 bildet mit den Seitenwänden 54, 56 die Teilbereiche der flachen Kanäle 58, 62 hinter dem Kreuzungshohlraum 66. Der untere Bereich 76 bildet mit den Seitenwänden 54, 56 die Bereiche der tiefen Kanäle 60, 64 hinter dem Kreuzungshohlraum 66.

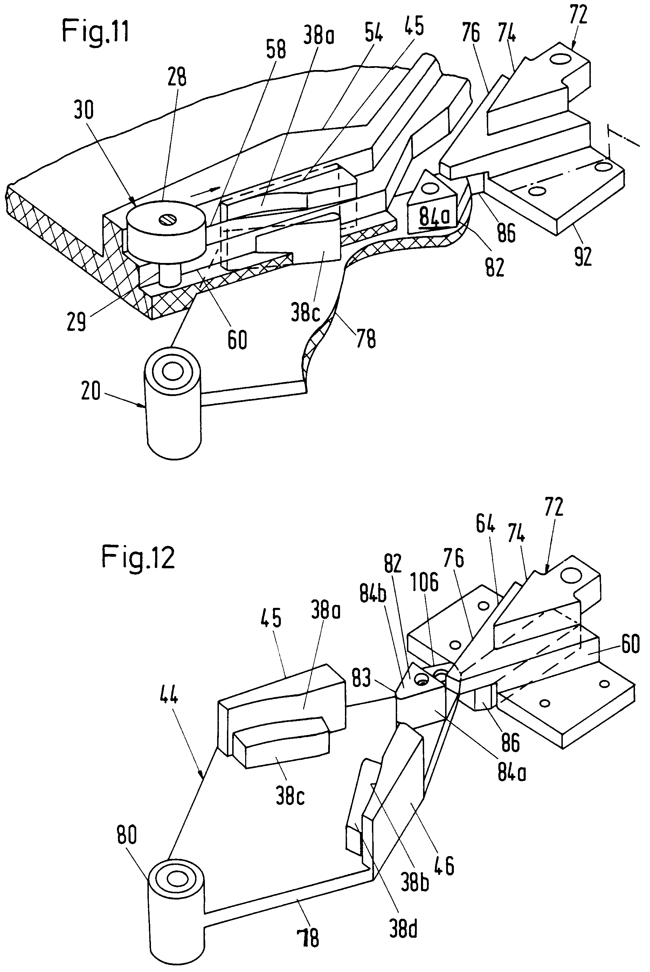

Das einteilige Bauteil 44 enthält ein im allgemeinen horizontales Plattenbauteil 78, das einen hülsenförmigen Bereich 80 aufweist, welcher einen Teil der Stutzenwellen-Lagerungsanordnung 20 (Fig.12) bildet. Das Scheibennockenbauteil 45 ist einteilig mit dem Plattenbauteil 78 ausgebildet und legt eine erste Steueroberfläche 38a fest, welche wahlweise in dem flachen Kanal 58 positioniert ist, wenn sich das einteilige Bauteil 44 in einer ersten Position befindet. Zusätzlich bildet das Nockenscheibenbauteil 45 eine zweite Steueroberfläche 38c, welche wahlweise innerhalb des tiefen Kanals 60 positioniert ist, wenn sich das einteilige Bauteil in der gleichen Position befindet. Das Nockenscheibenbauteil 46 ist ebenfalls einteilig mit dem Plattenbauteil 78 ausgebildet und legt eine erste Steueroberfläche 38b, welche wahlweise innerhalb des flachen Kanals 62 positioniert ist, wenn sich das einteilige Bauteil 44 in der entgegengesetzten Position befindet, und eine zweite Steueroberfläche 38d fest, welche wahlweise innerhalb des tiefen Kanals 64 positioniert ist, wenn sich das einteilige Bauteil 44 in solch einer entgegengesetzten Position befindet. Das einteilige Bauteil 44 enthält zusätzlich ein bewegliches Nasenbauteil 82, welches fest mit dem Plattenbauteil 78 verbunden ist. Die bewegliche Nase 82 bildet eine erste Blockieroberfläche 84a, welche fluchtend mit der Oberfläche des unteren Bereichs 76 ausgerichtet ist, welcher den tiefen Kanal 60 bildet, wenn sich das einteilige Bauteil 44 in der Position gemaß Fig.12 befindet. Die bewegliche Nase 82 legt ebenfalls eine zweite Blockieroberfläche 84b fest, welche fluchtend mit der Oberfläche des unteren Bereichs 76 ausgerichtet ist, welcher den tiefen Kanal 64 bildet, wenn sich das einteilige Bauteil 44 in der entgegengesetzten Position befindet.

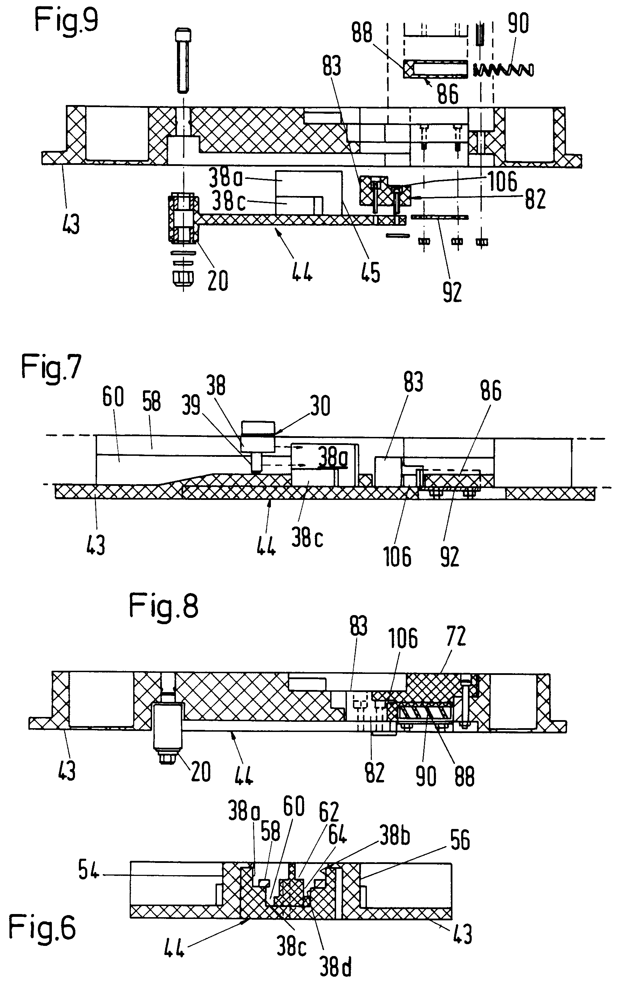

Zusätzlich zum vorderen Bereich 83 enthält die bewegliche Nase 82 einen rückwärtigen Bereich 106, welcher eine Höhe aufweist, die geringer als die des vorderen Bereichs 83 ist. Der rückwärtige Bereich 106 ist unterhalb des unteren Bereichs 76 der feststehenden Nase 70 angeordnet und bildet gegenüberliegende Steueroberflächen 108a, 108b. Der Zweck der Steueroberflächen 108a, 108b im rückwärtigen Bereich 106 der beweglichen Nase liegt darin, das einteilige Bauteil 44 in fluchtende Ausrichtung mit der korrespondierenden Bahn zu bringen und zwar für die Führungsbauteile, die sich resultierend aus dem umgekehrten Betrieb des Fördersystems Zurück bewegen können. Dies ist ein sicheres Merkmal zur Vermeidung von Beschädigungen an dem Führungsstift oder der Gleitschuhanordnung, sollte der Förderer zu Zwecken der Wartung oder aus anderen Gründen umgekehrt betrieben werden. Ein nach einer Seite federbelasteter Anschlag 86 ist verschiebbar angeordnet zum Eingriff in den rückwärtigen Bereich 106, um zum Festhalten des einteiligen Bauteils 44 in seiner ersten oder zweiten Position eine leichte Kraft zu schaffen. Wie aus Fig.9 am besten ersichtlich wird, enthält der Anschlag 86 ein Kontaktbauteil 88, eine nach einer Seite belastende Feder 90 und eine Platte 92 zum Positionieren des Kontaktbauteils 88 für eine reziproke Bewegung in bezug auf das Plattenbauteil 88.

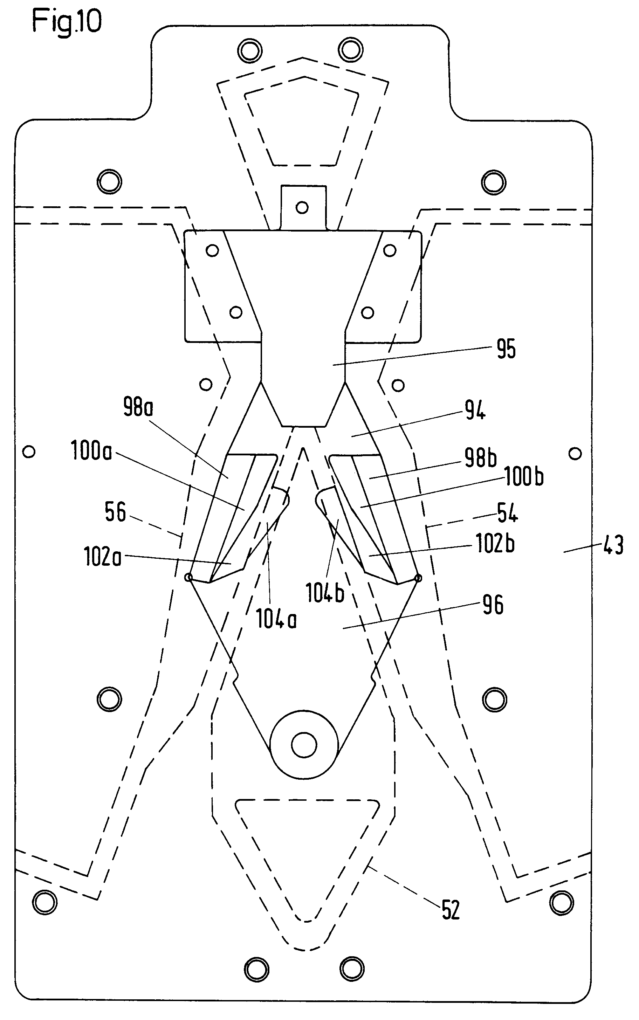

Wie am besten aus Fig.10 zu sehen ist, weist die Grundplatte 43 einen zentralen Hohlraum 94 auf, welche in ihr zur Aufnahme des einteiligen Bauteils 44 ausgebildet ist. Der zentrale Hohlraum 94 enthält einen Hohlraumbereich 96, welcher die generelle Tiefe des Plattenbauteils 78 aufweist. Der Hohlraum 94 enthält zusätzlich ein Paar Hohlraumbereiche 98a, 98b, welche begrenzend wirken, um eine Oberfläche in den jeweiligen Seitenwänden 56, 54 zu bilden. Der zentrale Hohlraum 94 enthält zusätzlich Hohlraumbereiche 100a, 100b, welche durch die Grundplatte 43 hindurchdringen. Die Hohlraumbereiche 98a, 100a nehmen den Bereich des Nockenscheibenbauteils 46 auf, welcher die Steueroberfläche 38b bildet. Die Hohlraumbereiche 98b, 100b nehmen den Bereich des Nockenscheibenbauteils 45 auf, welcher die Steueroberfläche 38a bildet. Der Hohlraum 94 enthält zusätzlich Hohlraumbereiche 102a, 102b, die begrenzend wirken, um innerhalb der jeweiligen Seitenwände 56, 54 unterhalb der jeweiligen Flachbereiche 62, 58 eine Oberfläche zu bilden. Der zentrale Hohlraum enthält zusätzlich Hohlraumbereiche 104a, 104b, welche die Grundplatte 43 durchdringen. Die Hohlraumbereiche 102a, 104a nehmen den Bereich des Nockenscheibenbauteils 46 auf, der die Steueroberfläche 38d bildet. die Hohlraumbereiche 102b, 104b nehmen den Bereich des Nockenscheibenbauteils 45 auf, der die Steueroberfläche 38c bildet.

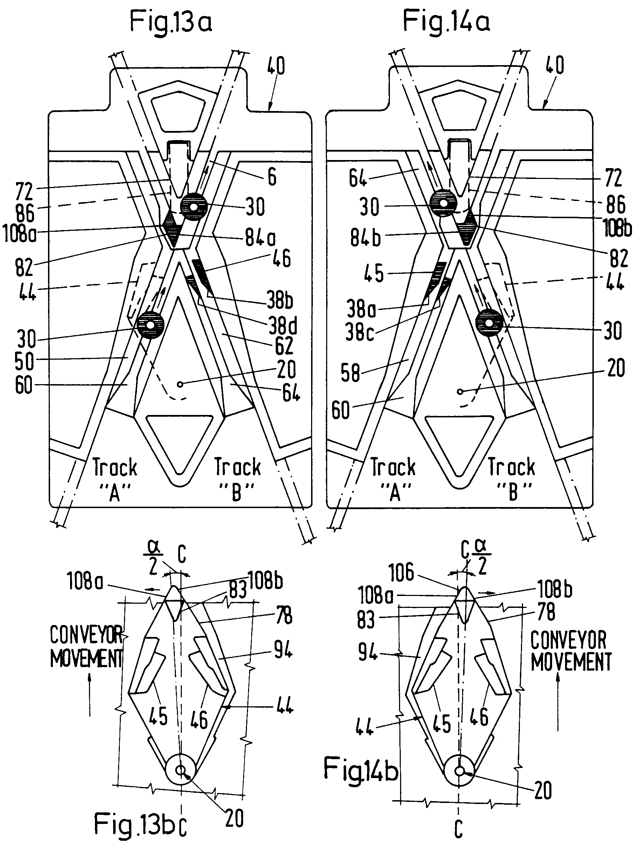

Der Betrieb des Führungsstifts 40 ist am besten in den Fig. 13a-14b dargestellt Fig.13a zeigt eine Stellwerkanordnung 40, in welcher das einteilige Bauteil 44 fluchtend mit der Bahn "A" ausgerichtet ist. In, dieser Ausrichtung wird das einteilige Bauteil gegen den Uhrzeigersinn gedreht, wie dies von oben gesehen aus der Fig.13b ersichtlich wird, um die Blockieroberfläche 84a mit dem tiefen Kanal 60 fluchtend auszurichten. In solch einer Ausrichtung mit Bahn "A" ist das Nockenscheibenbauteil 46 derart positioniert, daß es die die Bahn "B" entlanglaufenden Führungsbauteile festhält. In dieser Orientierung erstreckt sich die erste Steueroberfläche 38b in den flachen Kanal 62 hinein, wo sie mit der Führungsrolle 28 eines Führungsbauteils 30, welches die Bahn "B" entlangläuft, in Eingriff stehen wird. Auf gleiche Weise wird die zweite Steueroberfläche 38d in dem tiefen Kanal 64 zur Anstellung durch einen Stift 29 des Führungsbauteils 30 angeordnet. In der Praxis wird die zweite Steueroberfläche 38d jedoch nur angestellt, wenn eine Führungsrolle 28 fehlt oder schwer beschädigt ist. Somit dient die zweite Steueroberfläche nur als überzählige Reserve, um sicherzustellen, daß das einteilige Bauteil 44 von der Position gemaß Fig.13b in die Position gemaß Fig.14b geschaltet wird, und zwar durch das die Bahn "B" entlanglaufende Führungsbauteil 30. Wie im Vergleich der Fig.13b und 14b gesehen werden kann, wird die Bewegung des einteiligen Bauteils 44 von einer fluchtend mit der Bahn "A" ausgerichteten Position in eine fluchtend mit der Bahn "B" ausgerichteten Position erreicht durch die Rotation des einteiligen Bauteils um die Stutzenwelle 20 im Uhrzeigersinn, und zwar um den Winkel alpha (α), wie dies von oben gesehen werden kann.

Wenn das einteilige Bauteil in fluchtende Ausrichtung mit der Bahn "B" gedreht wird, wie die aus den Fig.14a und 14b ersichtlich wird, wird die Blockieroberfläche 84b fluchtend mit dem tiefen Kanal 64 ausgerichtet, um die Stifte 29 eines ankommenden Führungsbauteils 30 durch den Kreuzungshohlraum 66 zu führen. Wenn sich das einteilige Bauteil 44 gemäß. Fig.14b in ausgerichteter Position zur Bahn "B" befindet, wird das Nockenscheibenbauteil 45 in die Position innerhalb der Bahn "A" rotiert, wie dies in Fig.14a verdeutlicht ist. In dieser Psition wird die Steueroberfläche 38a innerhalb des flachen Kanals 58 positioniert, und zwar für den Eingriff durch eine Führungsrolle 28 eines die Bahn "A" entlanglaufenden Führungsbauteils 30. Die zweite Steueroberfläche 38c wird innerhalb des tiefen Kanals 60 positioniert, und zwar für den Eingriff durch einen Stift 29 eines die Bahn "A" entlanglaufenden Führungsbauteils 30, falls das Auflager fehlt oder schwer beschädigt ist. Wenn eine der Steueroberflächen 38a, 38c durch die jeweilige Führungsrolle oder den Stift kontaktiert wird, wird das einteilige Bauteil 44 von der in Fig.14b dargestellten Position zu der in Fig.13b dargestellten Position rotiert, um die Blockieroberfläche 84a mit dem tiefen Kanal 60 fluchtend auszurichten, um die Führungsstifte der Führungsbauteile 30 entlang der Bahn "A" durch den Kreuzungshohlraum 66 zu führen.

Wegen der besonderen Konfiguration des einteiligen Bauteils, einschließlich der Scheibennocken 45, 46, der Blockieroberflächen 84a, 84b und der Stutzenwelle 20, ist es in seiner Ausrichtung entweder zur Bahn "A" oder zur Bahn "B" relativ stabil. Der Anschlag 86 dient dem Zweck, ein Zurückspringen des einteiligen Bauteils 44 zu vermeiden, wenn es von einer zur anderen Position umschaltet, und andererseits ein Klappern des einteiligen Bauteils zu verhindern. Jedoch würde sie Stellwerkanordnung 40 auch ohne den Anschlag betreibbar sein.

In dem dargestellten Ausführungsbeispiel sind die Grundplatte 43, der vordere Teilbereich 72 der feststehenden Nase 70 und das Plattenbauteil 78 aus Polyurethan-Guß hergestellt. Der Vorteil liegt darin, daß das Material leicht ist und einfach in die gewünschte Form gebracht werden kann. Solch ein Material wird von der Firma UNIROYAL unter der Bezeichnung ADIPRENE vermarktet. Der Hersteller der Hauptkomponenten der Stellwerkanordnung 40 paßt die Konfiguration der offenbarten Ausführungsform solch einem Material an, weil die Stellwerkanordnung die in den verschiedenen Komponenten plazierten Spannungen reduziert. Weil sich das einteilige Bauteil 44 nur um einen kleinen Winkel Alpha (α) bewegt, der im Ausführungsbeispiel 4,5 Grad beträgt, bewegt sich das Bauteil mit einer relativ geringen Geschwindigkeit zwischen den abwechselnden Positionen. Weil weiterhin die Nockenscheibenbauteile durch die Führungsrollenoberflächen angestellt werden, welche innerhalb der flachen Kanäle 58 und 62 eingeschlossen sind, werden die auf den verschiedenen Komponenten plazierten Spannungen reduziert. Um aber sicherzustellen, daß die Komponenten, in welchen die höchsten Spannungen erwartet werden, eine hohe Verschleißfestigkeit aufweisen, werden die bewegliche Nase 82 und der vordere Teilbereich 72 der feststehenden Nase 70 als herausnehmbare Einsätze ausgebildet, welche aus härterem Material als die übrigen Komponenten bestehen können. Zusätzlich können solche Punkte bei Verschleiß ersetzt werden. In dem Ausführungsbeispiel ist die bewegliche Nase 82 aus bearbeitungsfähigem Kunststoff wie DELRIN oder dgl. hergestellt, welches von verschiedenen Herstellern angeboten wird. Die Verschleißteile 110a, 110b können in den Wandbereichen, welche die tiefen Kanäle 60 und 64 unterhalb (hinter) des Kreuzungshohlraums 66 (Fig.4) bilden, enthalten sein.

In dem Ausführungsbeispiel liegen die Bahnen "A" und "B" in einem Winkel von 20 Grad in bezug auf die Bewegungsrichtung der Artikel-Förderderoberfläche 12, welcher den Ablenkwinkel des Fördersystems bildet. Somit wird ersichtlich, daß der Winkel von 4.5 Grad, um welchen sich das einteilige Bauteil 44 zwischen den einzelnen Ausrichtungen mit den Bahnen "A" und "B" dreht, signifikant kleiner als die Hälfte des Ablenkwinkels von dem Fördersystem 10 ist. Dies wird durch die Anordnung der Drehachse -der Stutzenwelle 20 des einteiligen Bauteils in Förderrichtung gesehen vor den Nockenscheibenbauteilen 45, 46 erreicht. Weil das Nasenbauteil 82 notwendigerweise hinter (unterhalb) den Nockenscheibenbauteilen angeordnet ist, verstärkt diese Anordnung die Bewegung des beweglichen Nasenbauteils 82 und stellt somit eine adequate Bewegung um einen relativ kleinen Winkel sicher. Weil das einteilige Bauteil weiterhin primär zwischen Positionen in bezug auf die Bewegung der Führungsrolle der Führungselemente verstellt wird, aber die Ablenkung der Führungselemente durch die Blockieroberflächen 84a, 84b, welche die Stiftbereiche der Führungsbauteile ablenken, erfolgt, wird eine verbesserte Durchfuhrbarkeit durch Reduktion der Spannungen sowohl am Kreuzungs-Stellwerk als auch den Führungselementen, ebenso wie durch Reduktion des Drehwinkels des einteiligen Bauteils 44 erreicht.

Trotz der Positionierung des Drehpunktes des einteiligen Bauteils 44 in Förderrichtung gesehen vor den Nockenscheibenbauteilen und den Blockieroberflächen sind weiterhin Mittel zum Stellen des einteiligen Bauteils in Antwort auf die Führungsbauteile vorgesehen, welche sich in bezug auf ihre normale Bewegungsrichtung nach oben bewegen, um Beschädigungen an-den Führungsbauteilen oder dem Kreuzungs-Stellwerk zu vermeiden.

Somit wird ersichtlich, daß die vorliegende Erfindung ein ungewöhnlich kompaktes, geräuscharmes und betriebssicheres Kreuzungs-Stellwerk oder eine Stiftführung schafft. Durch Kombination sowohl der Steuerungsoberflächen, welche auf die Führungsbauteile ansprechen, um das einteilige Bauteil zu rotieren, als auch der Blockieroberflächen, welche die Führungsbauteile auf ihrem geeigneten, vorgegebenen Bahn entlangführen, in einem einzigen einteiligen Bauteil wird die Notwendigkeit vermieden, komplizierte Verbindungen von Stangenbauteilen und dgl. vornehmen zu müssen. Weiterhin kann das einteilige Bauteil aus einem Kunststoffmaterial hergestellt sein, wodurch die durch die Berührung der Führungsbauteile mit dem einteiligen Bauteil erzeugten Geräusche weiter reduziert werden. Zusätzlich erzielt die signifikante Reduktion der sich bewegenden Teile eine angepaßte Reduktion in der Wartung.

Änderungen in den Modifikationen der spezifisch beschriebenen Ausführungsformen können durchgeführt werden, ohne daß von den Prinzipien der Erfindung abgewichen wird. Bspw. kann die Erfindung für Fördersysteme angewandt werden, die einen Ablenkwinkel von größer oder kleiner als 20 Grad aufweisen. Zusätzlich können die Grundplatte und das einteilige Bauteil je aus einem einzigen Stück Kunststoff hergestellt sein, wie bspw. Polyurethan-Guß, ohne Verwendung der getrennt befestigten Verschleißteile. In der Tat können Solch einteilig hergestellte Komponenten wesentlich billiger hergestellt werden und können für besondere Anwendungen ausreichend hart gemacht werden. Trotz dieser und anderer Modifikationen wird die Erfindung nur durch den Schutzbereich der Patentansprüche begrenzt, worin aber die Äquivalente mit eingeschlossen sind.

## Patentansprüche

1. Fördersystem, bestehend aus einer Vielzahl von endlos umlaufenden, langgestreckten und Artikel tragenden Bauteilen (Latte 13),
aus mindestens einem Ablenkelement (Gleitschuh 14) für die Artikel, das auf mindestens einem der tragenden Bauteile (Latte 13) in dessen Längsrichtung bewegbar ist, um die Artikel entlang der Länge der tragenden Bauteile (12) abzulenken, wenn der Förderer (10) in Betrieb ist, wobei das Ablenkelement (Gleitschuh 14) ein Führungsbauteil (30) aufweist,
aus Führungsbahnen (17,19), die mit dem Führungsbauteil (30) des Ablenkelementes (Gleitschuh 14) kooperieren, um das Ablenkelement (Gleitschuh 14) in einer vorbestimmten Weise relativ zu derjenigen der tragenden Bauteile (12) zu bewegen, wenn der Förderer (10) in Betrieb ist, wobei die Führungsbahnen (17,19) erste und zweite sich kreuzende Führungsbahnen (19) in Richtung einer ersten Strecke (A) und einer zweiten Strecke (B) enthalten, die jeweils Bahnoberflächen zur Führung des Führungsbauteils (30) aufweisen und die Bahnoberflächen jeweils eine Öffnung aufweisen, um eine Passage des Führungsbauteils (30), das sich entlang der Bahnoberfläche der anderen Strecke (A,B) bewegt, dort hindurch zu gestatten,
aus mechanischen Stellwerkanordnungen (40) mit einem einteiligen Bauteil (44), das in der Ebene der Führungsbahnen (19) zwischen einer ersten Position und einer zweiten Position schwenkbar ist, wobei in der ersten Position die erste Öffnung blockiert und eine Bewegung des in der ersten Strecke (A) geführten Führungsbauteils (30) durch die erste Öffnung unterbunden wird und in der zweiten Position die zweite Öffnung blockiert und eine Bewegung des in der zweiten Strecke (B) geführten Führungsbauteils (30) durch die zweite Öffnung unterbunden wird,
aus einem ersten Nockenscheibenbauteil (45) der Stellwerkanordnung (40) mit einer ersten in die erste Strecke (A) hineinragenden Steueroberfläche (38a) zur Betätigung durch ein Führungsbauteil (30), das sich in dem ersten Weg bewegt, um das einteilige Bauteil (44) zu rotieren, wenn sich das einteilige Bauteil (44) in der zweiten Position befindet,
aus einem zweiten Nockenscheibenbauteil (46) der Stellwerkanordnung (40) mit einer zweiten in die zweite Strecke (B) hineinragenden Steueroberfläche (38b) zur Betätigung durch ein Führungsbauteil (30), das sich in dem zweiten Weg bewegt, um das einteilige Bauteil (44) zu rotieren, wenn sich das einteilige Bauteil (44) in der ersten Position befindet,
und aus an dem einteiligen Bauteil (44) angeordneten ersten und zweiten Blockieroberflächen (84a,84b), wobei die erste Blockieroberfläche (84a) die erste Öffnung bedeckt, wenn sich das einteilige Bauteil (44) in der ersten Position befindet und die zweite Blockieroberfläche (85a) die zweite Öffnung bedeckt, wenn sich das einteilige Bauteil (44) in der zweiten Position befindet.
dadurch gekennzeichnet,
daß das einteilige Baute (44) ein sich in der Ebene der Führungsbahnen (19) erstreckendes Plattenbauteil (78) aufweist, von dem sich die ersten und zweiten Nockenscheibenbauteile (45,46) erstrecken und an dem die ersten und zweiten Blockieroberflächen (84a,84b) angeordnet sind.

2. Fördersystem nach Anspruch 1,
dadurch gekennzeichnet,
daß das Plattenbauteil (78) um eine Achse schwenkbar ist, die in Bewegungsrichtung des Führungsbauteils (30) gesehen stromaufwärts vor den Nockenscheibenbauteilen (45,46) angeordnet ist.

3. Fördersystem nach Anspruch 1 oder 2,
dadurch gekennzeichnet,
daß an dem Plattenbauteil (78) eine dritte, in die erste Strecke (A) hineinragende Steueroberfläche (38c) zur Betätigung durch das Führungsbauteil (30), das sich in der ersten Strecke (A) bewegt, um das Plattenbauteil (78) zu rotieren, wenn dieses sich in der zweiten Position befindet, und eine vierte, in die zweite Strecke (B) hineinragende Steueroberfläche (38d) zur Betätigung durch das Führungsbauteil (30), das sich in der zweiten Strecke (B) bewegt, um das Plattenbauteil (78) zu rotieren, wenn sich dieses in der ersten Position befindet, angeordnet sind.

4. Fördersystem nach einem der Ansprüche 1 bis 3,
dadurch gekennzeichnet,
daß das Plattenbauteil (78) in einem Winkel von weniger als etwa 15 Grad zwischen der ersten und zweiten Position schwenkbar ist.

5. Fördersystem nach Anspruch 4,
dadurch gekennzeichnet,
daß der Winkel angenähert 4,5 Grad beträgt.

6. Fördersystem nach einem der Ansprüche 1 bis 5,
dadurch gekennzeichnet,
daß das Führungsbauteil (30) aus einer Führungsrolle (28) und einem Stift (29) besteht, wobei sich der Stift (29) in Richtung der Führungsbahn (19) über die Führungsrolle (28) erstreckt, daß die ersten und zweiten Steueroberflächen (38a,38b) durch die Führungsrolle (28) des Führungsbauteils (30) betätigbar sind und daß durch die ersten und zweiten Blockieroberflächen (84a,84b) der Stift (29) des Führungsbauteils (30) führbar ist.

7. Fördersystem nach Anspruch 6,
dadurch gekennzeichnet,
daß durch den Stift (29) des Führungsbauteils (30) die dritten und vierten Steueroberflächen (38c,38d) betätigbar sind.

8. Stiftführung einer Bahnkreuzung für ein Artikel-Sortiersystem mit Ablenkelementen (Gleitschuh 14), die durch Führungsbauteile (30) angetrieben werden, und Führungsbahnen (19), die an einer Bahnkreuzung kreuzen, um die Führungsbauteile (30) durch die Kreuzung der Führungsbahnen (19) zu führen,
mit einem Grundbauteil (43),
mit einem sich generell in der Ebene der Führungsbahnen (19) erstreckenden Plattenbauteil (78),
mit an dem Plattenbauteil (78) angeordneten, ersten und zweiten Blockieroberflächen (84a,84b), um die Führungsbauteile (30) durch die Kreuzung der Führungsbahnen (19) zu führen,
mit Drehmittel (20) zur drehbaren Anordnung des Plattenbauteils (78) um das Grundbauteil (43) in der besagten Ebene zwischen ersten und zweiten Positionen, um eine der ersten und zweiten Blockieroberflächen (84a,84b) derart zu positionieren, daß sie ein Führungsbauteil (30) entlang der korrespondierenden Führungsbahn (19) führen,
und mit ersten und zweiten Nockenscheibenbauteilen (45,46), denen eine erste und eine zweite, in die jeweilige Führungsbahn (19) hineinragende Steueroberflächen (38a,38b) zur Betätigung durch das Führungsbauteil (30) zugeordnet ist, um das Plattenbauteil (78) zwischen der ersten und zweiten Position zu rotieren,
dadurch gekennzeichnet,
daß die ersten und zweiten Nockenscheibenbauteile (45,46) mit den ersten und zweiten Steueroberflächen (38a,38b) an dem Plattenbauteil (78) angeordnet sind und daß das Plattenbauteil (78) um eine Achse schwenkbar ist, die in Bewegungsrichtung des Führungsbauteils (30) gesehen stromaufwärts vor den Nockenscheibenbauteilen (45,46) angeordnet ist.

9. Stiftführung nach Anspuch 8,
dadurch gekennzeichnet,
daß an dem Plattenbauteil (78) eine dritte, in die erste Strecke (A) hineinragende Steueroberfläche (38c) zur Betätigung durch ein Führungsbauteil (30), das sich in der ersten Strecke (A) bewegt, um das Plattenbauteil (78) zu rotieren, wenn dieses sich in der zweiten Position befindet, und eine vierte, in die zweite Strecke (B) hineinragende Steueroberfläche (38d) zur Betätigung durch ein Führungsbauteil (30), das sich in der zweiten Strecke (B) bewegt, um das Plattenbauteil (78) zu rotieren, wenn sich dieses in der ersten Position befindet, angeordnet sind.

10. Stiftführung einer Bahnkreuzung für ein Artikel-Sortiersystem mit Ablenkelementen (Gleitschuh 14), die durch Führungsbauteile (30) angetrieben werden, und Führungsbahnen (19), die an einer Bahnkreuzung kreuzen, um die Führungsbauteile (30) durch die Kreuzung der Führungsbahnen (19) zu führen, wobei jedes der Führungsbauteile (30) eine Führungsrolle (28) und einen Stift (29) aufweist, der sich in Richtung der Führungsbahnen (19) über die Führungsrolle (28) hinaus erstreckt,
mit einem Grundbauteil (43),
mit ersten und zweiten Blockieroberflächen (84a,84b), um die Führungsbauteile (30) durch die Kreuzung der Führungsbahnen (19) zu führen,
mit einem sich generell in der Ebene der Führungsbahnen (19) erstreckenden Plattenbauteil (78),
mit Drehmittel (20) zur drehbaren Anordnung des Plattenbauteils (78) in der Ebene um das Grundbauteil zwischen ersten und zweiten Positionen, um eine der ersten und zweiten Blockieroberflächen (84a,84b) derart zu positionieren, daß sie ein Führungsbauteil (30) entlang der korrespondierenden Führungsbahn (19) führen,
und mit ersten und zweiten Nockenscheibenbauteilen (45,46), denen eine erste und eine zweite, in die jeweilige Führungsbahn (19) hineinragende Steueroberflächen (38a,38b) zur Betätigung durch das Führungsbauteil (30) zugeordnet ist, um das Plattenbauteil (78) zwischen der ersten und zweiten Position zu rotieren,
dadurch gekennzeichnet,
daß die ersten und zweiten Nockenscheibenbauteile (45,46) mit den ersten und zweiten Steueroberflächen (38a,38b) an dem Plattenbauteil (78) angeordnet sind, die ersten und zweiten Steueroberflächen (38a,38b) von den Führungsrollen (28) des Führungsbauteils (30) betätigbar sind und die ersten und zweiten Blockieroberflächen (84a,84b) derart positioniert sind, um den Stift (29) des Führungsbauteils (30) zu führen.

11. Stiftführung nach Anspruch 10,
dadurch gekennzeichnet,
daß das Plattenbauteil (78) um eine Achse schwenkbar ist, die in Bewegungsrichtung des Führungsbauteils (30) gesehen stromaufwärts vor den Nockenscheibenbauteilen (45,46) angeordnet ist.

12. Stiftführung nach Anspuch 10 oder 11,
dadurch gekennzeichnet,
daß an dem Plattenbauteil (78) eine dritte, in die erste Strecke (A) hineinragende Steueroberfläche (38c) zur Betätigung durch die Führungsrolle (28), die sich in der ersten Strecke (A) bewegt, um das Plattenbauteil (78) zu rotieren, wenn dieses sich in der zweiten Position befindet, und eine vierte, in die zweite Strecke (B) hineinragende Steueroberfläche (38d) zur Betätigung durch die Führungsrolle (28), die sich in der zweiten Strecke (B) bewegt, um das Plattenbauteil (78) zu rotieren, wenn sich dieses in der ersten Position befindet, angeordnet sind.

13. Stiftführung nach einem der Ansprüche 8 bis 12,
dadurch gekennzeichnet,
daß sich das Plattenbauteil (78) um das Drehbauteil in einem Winkel von weniger als etwa 15 Grad zwischen den ersten und zweiten Positionen dreht.

14. Stiftführung nach Anspruch 13,
dadurch gekennzeichnet,
daß der Winkel etwa 4,5 Grad beträgt.

15. Stiftführung nach einem der Ansprüche 8 bis 14,
dadurch gekennzeichnet,
daß die ersten und zweiten Blockieroberflächen (84a,84b) in Bewegungsrichtung des Führungsbauteils (30) gesehen stromaufwärts zusammenlaufen.

16. Stiftführung einer Bahnkreuzung für ein Artikel-Sortiersystem mit Ablenkelementen (Gleitschuh 14), die durch Führungsbauteile (30) angetrieben werden, und Führungsbahnen (19), die an einer Bahnkreuzung kreuzen, um die Führungsbauteile (30) durch die Kreuzung der Führungsbahnen (19) zu führen, die zur Bewegungsrichtung des Sortiersystems abgewinkelt sind und einen Ablenkwinkel bilden,
mit einem Grundbauteil (43),
mit einem sich generell in der Ebene der Führungsbahnen (19) erstreckenden Plattenbauteil (78),
mit an dem Plattenbauteil (78) angeordneten, ersten und zweiten Blockieroberflächen (84a,84b), um die Führungsbauteile (30) durch die Kreuzung der Führungsbahnen (19) zu führen,
mit Drehmittel (20) zur drehbaren Anordnung des Plattenbauteils (78) um das Grundbauteil (43) in der besagten Ebene zwischen ersten und zweiten Positionen, um eine der ersten und zweiten Blockieroberflächen (84a,84b) derart zu positionieren, daß sie ein Führungsbauteil (30) entlang der korrespondierenden Führungsbahn (19) führen,
und mit ersten und zweiten Nockenscheibenbauteilen (45,46), denen eine erste und eine zweite, in die jeweilige Führungsbahn (19) hineinragende Steueroberflächen (38a,38b) zur Betätigung durch das Führungsbauteil (30) zugeordnet ist, um das Plattenbauteil (78) zwischen der ersten und zweiten Position zu rotieren,
dadurch gekennzeichnet,
daß die ersten und zweiten Nockenscheibenbauteile (45,46) mit den ersten und zweiten Steueroberflächen (38a,38b) an dem Plattenbauteil (78) angeordnet sind und daß sich das Plattenbauteil (78) zwischen den ersten und zweiten Positionen um einen Winkel (α) dreht, welcher kleiner als die Hälfte des Ablenkwinkels ist.

17. Stiftführung nach Anspruch 16,
dadurch gekennzeichnet,
daß der Ablenkwinkel 20 Grad und der Winkel (α) angenähert 4,5 Grad beträgt.

## Claims

1. Conveyor system comprising:
- a number of endlessly rotating, longitudinally extending and article supporting components (slats 13),
- at least one deflector element (diverter boot 14) for the articles that can be moved along at least one of the supporting components (slats 13) in its longitudinal direction so as to divert the article along the length of the supporting component (12) when the conveyor (10) is in operation, such that the deflector element (diverter boot 14) comprises a guide component (30),
- guide tracks (17, 19) that cooperate with the guide component (30) of the deflector element (diverter boot 14) to move the deflector element (diverter boot 14) in a predetermined way relative to its respective supporting component (12) when the conveyor (10) is in operation, such that the guide tracks (17, 19) consist of first and second guide tracks (19) that cross in the direction of a first track (A) and a second track (B), each of which has track surfaces for the guiding of the guide component (30) and those track surfaces each have an opening to allow the guide component (30) moving along the track surface of the other track (A, B) to pass through,
- a mechanical switch arrangement (40) with an integral component (44) that can be swivelled in the plane of the guide tracks (19) between a first position and a second position, such that in the first position the first opening is blocked and movement of the guide component (30) guided along the first track (A) through the first opening is prevented, and in the second position the second opening is blocked and movement of the guide component (30) guided along the second track (B) through the second opening is prevented,
- a first cam disc component (45) of the switch arrangement (40) with a first control surface (38a) projecting into the first track (A) and co-acting with a guide component (30) moving along the first track, such that the integral component (44) swivels when the said integral component (44) is in the second position,
- a second cam disc component (46) of the switch arrangement (40) with a second control surface (38b) projecting into the second track (B) and co-acting with a guide component (30) moving along the second track, such that the integral component (44) swivels when the said integral component (44) is in the first position,
- and first and second blocking surfaces (84a, 84b) arranged on the integral component (44) such that the first blocking surface covers the first opening when the integral component (44) is in the first position and the second blocking surface (85a) covers the second opening when the integral component (44) is in the second position,
**characterized in that**
the integral component (44) comprises a plate component (78) extending in the plane of the guide tracks (19), from which the first and second cam disc components (45, 46) project and on which the first and second blocking surfaces (84a, 84b) are arranged.

2. Conveyor system according to Claim 1,
**characterized in that**
the plate component (78) can swivel about an axis positioned upstream before the cam disc components (45, 46) when looked at in the movement direction of the guide component (30).

3. Conveyor system according to Claims 1 or 2
**characterized in that**
on the plate component (78) are arranged a third control surface (38c) projecting into the first track (A) and coacting with the guide component (30) moving along the first track (A) such that the plate component swivels when it is in the second position, and a fourth control surface (38d) projecting into the second track (B) and co-acting with the guide component (30) moving along the second track (B) such that the plate component (78) swivels when it is in the first position.

4. Conveyor system according to any of Claims 1 to 3,
**characterized in that**
the plate component (78) can swivel through an angle smaller than about 15 degrees between its first and second positions.

5. Conveyor system according to Claim 4,
**characterized in that**
the said angle is approximately 4.5 degrees.

6. Conveyor system according to any of Claims 1 to 5,
**characterized in that**
the guide component (30) consists of a guide roll (28) and a pin (29) such that the pin (29) projects beyond the guide roll (28) in the direction of the guide track (19), the first and second control surfaces (38a, 38b) can co-act with the guide roll (28) of the guide component (30), and the pin (29) of the guide component (30) can be guided by the first and second blocking surfaces (84a, 84b).

7. Conveyor system according to Claim 6,
**characterized in that**
the third and fourth control surfaces (38c, 38d) can co-act with the pin (29) of the guide component (30).

8. Pin guide system for a crossing in an article sorting system with deflector elements (diverter boot 14) driven by guide components (30), and guide tracks (19) that cross at the crossing, such that the guide components (30) are guided through the crossing of the guide tracks (19)
- with a base component (43),
- with a plate component (78) that extends essentially in the plane of the guide tracks (19),
- with first and second blocking surfaces (84a, 84b) arranged on the plate component (78), such that the guide components (30) are guided through the crossing of the guide tracks (19),
- with means of rotation enabling the plate component (78) to swivel into place about the base component (43) in the said plane between a first and a second position, such that the first and second blocking surfaces (84a, 84b) are so positioned that they guide a guide component (30) along the corresponding guide track (19),
- and with first and second cam disc components (45, 46) having first and second control surfaces (38a, 38b) projecting into the respective guide tracks (19) and co-acting with the guide component (30), in order to swivel the plate component (78) between its first and second positions,
**characterized in that**
the first and second cam disc components (45, 46) with their first and second control surfaces (38a, 38b) are arranged on the plate component (78), and in that the plate component (78) can swivel about an axis located upstream before the cam disc components (45, 46) when looked at in the movement direction of the guide component (30).

9. Pin guide system according to Claim 8,
**characterized in that**
on the plate component (78) are arranged a third control surface (38c) projecting into the first track (A) and co-acting with a guide component (30) moving in the first track (A) to swivel the plate component (78) when this is in the second position, and a fourth control surface (38d) projecting into the second track (B) and co-acting with a guide component (30) moving in the second track (B) to swivel the plate component (78) when this is in the first position.

10. Pin guide system for a crossing in an article sorting system with deflector elements (diverter boot 14) driven by guide components (30), and guide tracks (19) that cross at the crossing, such that the guide components (30) are guided through the crossing of the guide tracks (19), wherein each of the guide components (30) comprises a guide roll (28) and a pin (29) that projects beyond the guide roll (28) in the direction of the guide tracks (19),
- with a base component (43),
- with first and second blocking surfaces (84a, 84b) to guide the guide components (30) through the crossing of the guide tracks (19),
- with a plate component (78) extending essentially in the plane of the guide tracks (19),
- with means of rotation enabling the plate component (78) to swivel into place about the base component and in the said plane between a first and a second position, such that the first and second blocking surfaces (84a, 84b) are so positioned that they guide a guide component (30) along the corresponding guide track (19),
- and with first and second cam disc components (45, 46) having first and second control surfaces (38a, 38b) projecting into the respective guide tracks (19) and co-acting with the guide component (30), in order to swivel the plate component (78) between its first and second positions,
**characterized in that**
the first and second cam disc components (45, 46) with their first and second control surfaces (38a, 38b) are arranged on the plate component (78), the first and second control surfaces (38a, 38b) can co-act with the guide rolls (28) of the guide component (30), and the first and second blocking surfaces (84a, 84b) are so positioned as to guide the pin (29) of the guide component (30).

11. Pin guide system according to Claim 10,
**characterized in that**
the plate component (78) can swivel about an axis located upstream before the cam disc components (45, 46) when looked at in the movement direction of the guide component (30).

12. Pin guide system according to Claims 10 or 11,
**characterized in that**
on the plate component (78) are arranged a third control surface (38c) projecting into the first track (A) and co-acting with the guide roll (28) moving along the first track (A) such that the plate component (78) swivels when it is in the second position, and a fourth control surface (38d) projecting into the second track (B) and co-acting with the guide roll (28) moving along the second track (B) such that the plate component (78) swivels when it is in the first position.

13. Pin guide system according to any of Claims 8 to 12,
**characterized in that**
the plate component (78) can swivel through an angle smaller than about 15 degrees between its first and second positions.

14. Pin guide system according to Claim 13,
**characterized in that**
the said angle is approximately 4.5 degrees.

15. Pin guide system according to any of Claims 8 to 14,
**characterized in that**
the first and second blocking surfaces (84a, 84b) converge upstream when looked at in the movement direction of the guide component (30).

16. Pin guide system for a crossing in an article sorting system with deflector elements (diverter boot 14) driven by guide components (30), and guide tracks (19) that cross at the crossing, such that the guide components (30) are guided through the crossing of the guide tracks (19), which diverge away from the movement direction of the sorting system and form a diversion angle,
- with a base component (43),
- with a plate component (78) extending essentially in the plane of the guide tracks (19),
- with first and second blocking surfaces (84a, 84b) to guide the guide components (30) through the crossing of the guide tracks (19),
- with means of rotation enabling the plate component (78) to swivel into place about the base component (43) and in the said plane between a first and a second position, such that the first and second blocking surfaces (84a, 84b) are so positioned that they guide a guide component (30) along the corresponding guide track (19),
- and with first and second cam disc components (45, 46) having first and second control surfaces (38a, 38b) projecting into the respective guide tracks (19) and co-acting with the guide component (30) in order to swivel the plate component (78) between its first and second positions,
**characterized in that**
the first and second cam disc components with their first and second control surfaces (38a, 38b) are arranged on the plate component (78), and the plate component (78) swivels between its first and second positions through an angle (α) smaller than half the diversion angle.

17. Pin guide system according to Claim 16,
**characterized in that**
the diversion angle is 20 degrees and the angle (α) is approximately 4.5 degrees.

## Revendications

1. Système de transport comportant :
- une pluralité d'éléments de montage (latte 13) tournant sans fin, longitudinaux et portant des articles,
- au moins un élément de déviation (patin de guidage 14) pour les articles, qui peut être déplacé sur au moins l'un des éléments de montage porteurs (latte 13) dans sa direction longitudinale, pour dévier les articles le long de la longueur des éléments de montage porteurs (12), lorsque le transporteur (10) est en fonctionnement, l'élément de déviation (patin de guidage 14) comportant un élément de guidage (30),
- des voies de guidage (17,19) qui coopèrent avec l'élément de guidage (30) de l'élément de déviation (patin de guidage 14), afin de déplacer l'élément de déviation (patin de guidage 14) d'une manière prédéfinie relativement à l'élément de montage porteur (12), lorsque le transporteur (10) est en fonctionnement, les voies de guidage (17,19) comprenant des première et seconde voies de guidage (19) se croisant, en direction d'un premier trajet (A) et d'un second trajet (B), qui présentent à chaque fois des surfaces de voie pour guider l'élément de guidage (30), et les surfaces de guidage présentant à chaque fois une ouverture, pour permettre le passage de l'élément de guidage (30) qui se déplace le long de la surface de voie de l'autre trajet (A,B),
- des postes d'aiguillage mécaniques (40) comportant un unique élément de montage (44) qui peut pivoter dans le plan des voies de guidage (19) entre une première position et une seconde position, dans la première position la première ouverture étant bloquée et un mouvement de l'élément de guidage (30) guidé dans le premier trajet (A) étant arrêté par la première ouverture, et dans la seconde position la seconde ouverture étant bloquée et un mouvement de l'élément de guidage (30) guidé dans le second trajet (B) étant arrêté par la seconde ouverture,
- une première came (45) du poste d'aiguillage (40) comprenant une première surface de commande (38a) faisant saillie dans le trajet (A), pour l'actionnement par un élément de guidage (30) qui se déplace dans la première course, pour tourner l'élément de montage unique (44), lorsque l'élément de montage unique (44) se trouve dans la seconde position,
- une seconde came (46) du poste d'aiguillage (40) comprenant une seconde surface de commande (38b) faisant saillie dans le second trajet (B), pour l'actionnement par un élément de guidage (30) qui se déplace dans la seconde course, pour tourner l'élément de montage unique (44), lorsque l'élément de montage unique (44) se trouve dans la première position,
- et des première et seconde surfaces de blocage (84a,84b) agencées sur l'élément de montage unique (44), la première surface de blocage (84a) recouvrant la première ouverture, lorsque l'élément de montage unique (44) se trouve dans la première position, et la seconde surface de blocage (85a) recouvrant la seconde ouverture, lorsque l'élément de montage unique (44) se trouve dans la seconde position,
caractérisé en ce que l'élément de montage unique (44) comporte une plaque (78) s'étendant dans le plan des voies de guidage (19), à partir duquel s'étendent les première et seconde cames (45,46), et sur lequel sont agencées les première et seconde surfaces de blocage (84a,84b).

2. Système de transport selon la revendication 1,
caractérisé en ce que la plaque (78) peut pivoter autour d'un axe qui est agencé, dans le sens du mouvement de l'élément de guidage (30), en amont devant les cames (45,46).

3. Système de transport selon l'une des revendications 1 ou 2,
caractérisé en ce que sur la plaque (78), sont agencées une troisième surface de commande (38c), faisant saillie dans le premier trajet (A), pour l'actionnement par l'élément de guidage (30) qui se déplace dans le premier trajet (A), pour tourner la plaque (78), lorsque celle-ci se trouve dans la seconde position, et une quatrième surface de commande (38d) faisant saillie dans le second trajet (B), pour l'actionnement par l'élément de guidage (30) qui se déplace dans le second trajet (B), pour tourner la plaque (78), lorsque celle-ci se trouve dans la première position.

4. Système de transport selon l'une des revendications 1 à 3,
caractérisé en ce que la plaque (78) peut être pivotée dans un angle de moins de 15 degrés entre les première et seconde positions.

5. Système de transport selon la revendication 4,
caractérisé en ce que l'angle vaut environ 4,5 degrés.

6. Système de transport selon l'une des revendications 1 à 5,
caractérisé en ce que l'élément de guidage (30) est constitué d'un galet de guidage (28) et d'une cheville (29), la cheville (19) s'étendant en direction de la voie de guidage (18) au-delà du galet de guidage (28), en ce que les première et seconde surfaces de commande (38a,38b) peuvent être actionnées par les galets de guidage (28) de l'élément de guidage (30), et en ce que la cheville (29) de l'élément de guidage (30) peut être guidée par les première et seconde surfaces de blocage (84a,84b).

7. Système de transport selon la revendication 6,
caractérisé en ce que les troisième et quatrième surfaces de commande (38c,38d) peuvent être actionnées par la cheville (29) de l'élément de guidage (30).

8. Guide de cheville d'un croisement de voies pour un système de triage d'articles, comportant :
- des éléments de déviation (patin de guidage 14) qui sont entraînés par des éléments de guidage (30), et des voies de guidage (19) qui se croisent à un croisement de voies, pour guider les éléments de guidage (30) à travers le croisement des voies de guidage (19),
- un élément de base (43),
- une plaque (78) s'étendant de façon générale dans le plan des voies de guidage (19),
- des première et seconde surfaces de blocage (84a,84b) agencées sur la plaque (78), pour guider les éléments de guidage (30) à travers le croisement des voies de guidage (19),
- des moyens de rotation (20) pour l'agencement rotatif de la plaque (78), autour de l'élément de base (43) dans ledit plan entre les première et seconde positions, pour positionner l'une des première et seconde surfaces de blocage (84a,84b) de sorte qu'elles guident un élément de guidage (30) le long de la voie de guidage correspondante (19),
- et des première et seconde cames (45,46), auxquelles sont associées une première et une seconde surfaces de commande (38a,38b) faisant saillie dans la voie de guidage correspondante (19), pour l'actionnement par l'élément de guidage (30), pour tourner la plaque (78) entre les première et seconde positions,
caractérisé en ce que les première et seconde cames (45,46) avec les première et seconde surfaces de commande (38a,38b) sont agencées sur la plaque (78), et en ce que la plaque (78) peut être pivotée autour d'un axe qui est agencé, dans le sens du déplacement de l'élément de guidage (30), en amont devant les cames (45,46).

9. Guide de cheville selon la revendication 8,
caractérisé en ce que sur la plaque (78) sont agencées une troisième surface de commande (38c), faisant saillie dans le premier trajet (A), pour l'actionnement par un élément de guidage (30) qui se déplace dans le premier trajet (A), pour tourner la plaque (78), lorsque celle-ci se trouve dans la seconde position, et une quatrième surface de commande (38d) faisant saillie dans le second trajet (B), pour l'actionnement par un élément de guidage (30) qui se déplace dans le second trajet (B), pour tourner la plaque (78), lorsque celle-ci se trouve dans la première position.

10. Guide de cheville d'un croisement de voies pour un système de triage d'articles, comportant :
- des éléments de déviation (patin de guidage 14) qui sont entraînés par des éléments de guidage (30), et des voies de guidage (19) qui se croisent à un croisement de voies, pour guider les éléments de guidage (30) à travers le croisement des voies de guidage (19), chacun des éléments de guidage (30) comportant un galet de guidage (28) et une cheville (29) qui s'étend en direction des voies de guidage (19) au-delà du galet de guidage (28),
- un élément de base (43),
- des première et seconde surfaces de blocage (84a,84b) pour guider les éléments de guidage (30) à travers le croisement des voies de guidage (19),
- une plaque (78) s'étendant de façon générale dans le plan des voies de guidage (19),
- des moyens de rotation (20) pour l'agencement rotatif de la plaque (78), dans le plan autour de l'élément de base, entre des première et seconde positions, pour positionner l'une des première et seconde surfaces de blocage (84a,84b) de sorte qu'elles guident un élément de guidage (30) le long de la voie de guidage correspondante (19),
- et des première et secondes cames (45,46), auxquelles sont associées une première et une seconde surfaces de commande (38a,38b) faisant saillie dans la voie de guidage correspondante (19), pour l'actionnement par l'élément de guidage (30), pour tourner la plaque (78) entre les première et seconde positions,
caractérisé en ce que les première et seconde cames (45,46) avec les première et seconde surfaces de commande (38a,38b) sont agencées sur la plaque (78), les première et seconde surfaces de commande (38a,38b) peuvent être actionnées par les galets de guidage (28) de l'élément de guidage (30), et les première et seconde surfaces de blocage (84a,84b) peuvent être positionnées de manière à guider la cheville (29) de l'élément de guidage (30).

11. Guide de cheville selon la revendication 10,
caractérisé en ce que la plaque (78) peut pivoter autour d'un axe qui est agencé, dans le sens du mouvement de l'élément de guidage (30), en amont devant les cames (45,46).

12. Guide de cheville selon l'une des revendications 10 ou 11,
caractérisé en ce que sur la plaque (78) sont agencées une troisième surface de commande (38c), faisant saillie dans le premier trajet (A), pour l'actionnement par le galet de guidage (28) qui se déplace dans le premier trajet (A), pour tourner la plaque (78), lorsque celle-ci se trouve dans la seconde position, et une quatrième surface de commande (38d) faisant saillie dans le second trajet (B), pour l'actionnement par le galet de guidage (28) qui se déplace dans le second trajet (B), pour tourner la plaque (78), lorsque celle-ci se trouve dans la première position.

13. Guide de cheville selon l'une des revendications 8 à 12,
caractérisé en ce que la plaque (78) peut être pivotée, autour de l'élément de rotation, dans un angle de moins de 15 degrés entre les première et seconde positions.

14. Guide de cheville selon la revendication 13,
caractérisé en ce que l'angle vaut environ 4,5 degrés.

15. Guide de cheville selon l'une des revendications 8 à 14,
caractérisé en ce que les première et seconde surfaces de blocage (84a,84b) se rejoignent, dans le sens du mouvement de l'élément de guidage (30), en amont.

16. Guide de cheville d'un croisement de voies pour un système de triage d'articles, comportant :
- des éléments de déviation (patin de guidage 14) qui sont entraînés par des éléments de guidage (30), et des voies de guidage (19) qui se croisent à un croisement de voies, pour guider les éléments de guidage (30) à travers le croisement des voies de guidage (19), qui sont recourbées vers le sens de déplacement du système de triage et forment un angle de déviation,
- un élément de base (43),
- une plaque (78) s'étendant de façon générale dans le plan des voies de guidage (19),
- des première et seconde surfaces de blocage (84a,84b) agencées sur la plaque (78), pour guider les éléments de guidage (30) à travers le croisement des voies de guidage (19),
- des moyens de rotation (20) pour l'agencement rotatif de la plaque (78), autour de l'élément de base (43) dans ledit plan entre les première et seconde positions, pour positionner l'une des première et seconde surfaces de blocage (84a,84b) de sorte qu'elles guident un élément de guidage (30) le long de la voie de guidage correspondante (19),
- et des première et seconde cames (45,46), auxquelles sont associées une première et une seconde surfaces de commande (38a,38b) faisant saillie dans la voie de guidage correspondante (19), pour l'actionnement par l'élément de guidage (30), pour tourner la plaque (78) entre les première et seconde positions,
caractérisé en ce que les première et seconde cames (45,46) avec les première et seconde surfaces de commande (38a,38b) sont agencées sur la plaque (78), et en ce que la plaque (78) tourne entre les première et seconde positions d'un angle (α) qui est plus petit que la moitié de l'angle de déviation.

17. Guide de cheville selon la revendication 16,
caractérisé en ce que l'angle de déviation vaut 20 degrés et l'angle (α) vaut environ 4,5 degrés.
